# EUROPÄISCHE PATENTSCHRIFT

(11) **EP 3 153 737 B1**
(45) Veröffentlichungstag und Bekanntmachung des Hinweises auf die Patenterteilung: **20.06.2018**
(21) Anmeldenummer: 16191102.9
(22) Anmeldetag: 28.09.2016
(51) Int. Cl.: F16F 1/38, B60G 7/02, F16F 1/387

(54) **FAHRWERKSLAGER**
SUSPENSION BEARING
PALIER DE CHÂSSIS

(30) Priorität: 02.10.2015 DE 102015116799
(43) Veröffentlichungstag der Anmeldung: 12.04.2017
(73) Patentinhaber: Benteler Automobiltechnik GmbH, 33102 Paderborn (DE)
(72) Erfinder: Schultz, Erik, 33100 Paderborn (DE)
(74) Vertreter: Griepenstroh, Jörg

(56) Entgegenhaltungen:
- WO-A1-97/12160
- DE-A1- 19 605 859
- JP-A- 2001 165 220
- US-A- 4 014 588
- US-A- 5 176 339
- US-A- 5 941 511

## Beschreibung

Die vorliegende Erfindung betrifft ein Gummi-Feststofflager zur Anordnung an einer Kraftfahrzeugachse gemäß den Merkmalen im Oberbegriff von Patentanspruch 1.

Aus dem Stand der Technik ist es bekannt an Kraftfahrzeugen Fahrwerksbauteile zu befestigen. An modernen Kraftfahrzeugen werden zumeist an selbsttragenden Karosserien Mehrlenkerachsen oder Verbundlenkerachsen zur Koppelung angebunden. Die Achsbauteile sind dabei drehbeweglich an der Karosserie oder an einem Hilfsrahmen befestigt. Um nicht nur die kinematische Koppelung des Rahmens mit dem Fahrwerksbauteil zu ermöglichen werden nicht nur reine Drehlager eingesetzt sondern elastokinematische Lager. Diese Lager ermöglichen es gleichzeitig Schwingungen und/oder Geräusche, die im Fahrbetrieb entstehen, zu verringern bzw. zu dämpfen.

Solche Lager werden auch Gummimetalllager oder Gummi-Feststofflager genannt. Sie zeichnen sich zumeist dadurch aus, dass eine Innenhülse und eine Außenhülse unter Eingliederung eines dazwischen befindlichen elastischen Werkstoffes miteinander gekoppelt sind. Die Innen- oder Außenhülse ermöglicht dann eine Drehbewegung beispielsweise um einen Bolzen. Der elastische Werkstoff ermöglicht eine Dämpfung von Schwingungen und/oder Geräuschen und in geringem Maße ebenfalls eine Verdrehung aufgrund elastischer Verformung.

Ein solches Lager ist beispielsweise aus der DE 10 2009 040 163 A1 bekannt. Aus der US 5 941 511 A ist ferner ein Gummimetalllager bekannt, in dem eine äußere Hülse und eine innere Hülse aus metallischem Werkstoff hergestellt sind sowie dazwischen angeordneter Elastomerwerkstoff ausgebildet ist. Ferner ist ein Zwischenstück aus einem Stahlwerkstoff oder metallischem Werkstoff in den Elastomerwerkstoff eingelassen. Solche Anordnungen sind auch aus der DE 196 05 859 A1 sowie der WO 97/12160 bekannt.

Aufgabe der vorliegenden Erfindung ist es bei einem gattungsgemäßen Gummi-Feststofflager die Axialsteifigkeit zu erhöhen.

Die zuvor genannte Aufgabe wird erfindungsgemäß mit einem Gummi-Feststofflager zur Anordnung an einer Kraftfahrzeugachse gemäß den Merkmalen im Patentanspruch 1 gelöst.

Vorteilhafte Ausgestaltungsvarianten der vorliegenden Erfindung sind Gegenstand der abhängigen Patentansprüche.

Das Gummi-Feststofflager zur Anordnung an einer Kraftfahrzeugachse weist eine Innenhülse und eine Außenhülse auf, wobei zwischen Innenhülse und Außenhülse eine elastische Zwischenschicht angeordnet ist. Die Innenhülse weist in Axialrichtung auf einer Seite eine Anschlagscheibe auf, welche sich von der Innenhülse radial nach außen erstreckt. Die Außenhülse erstreckt sich in Axialrichtung nur über einen Teil der Innenhülse und hat mithin eine geringere axiale Länge als die Innenhülse selbst. Zwischen Außenhülse und Anschlagscheibe ist somit in Axialrichtung ein Abstand ausgebildet. Bevorzugt sind dabei an dem gegenüberliegenden Ende der Anschlagscheibe die Enden von Innenhülse und Außenhülse axial auf gleicher Höhe angeordnet. Erfindungsgemäß ist nunmehr vorgesehen, dass im Bereich des Abstandes, vorzugsweise mithin zwischen Anschlagscheibe und Ende der Außenhülse, ein Zwischenstück aus festem Werkstoff angeordnet ist.

Dieses Zwischenstück aus festem Werkstoff ist aus einem Kunststoff ausgebildet. Somit wird das elastisch vorhandene Volumen der elastischen Zwischenschicht verringert, wodurch die axiale Steifigkeit erhöht wird. Da das Zwischenstück nicht zwischen Innenhülse und Außenhülse angeordnet ist, erhöht sich die radiale Steifigkeit geringer im Vergleich zu der axialen Steifigkeit. Das Verhältnis von axialer Steifigkeit zur radialen Steifigkeit kann somit gesteigert werden und ist bevorzugt größer 1,5:1, insbesondere größer 2:1 und bevorzugt größer gleich 2,5:1. Dies bedeutet letzterenfalls, dass eine 2,5-fach höhere Axialsteifigkeit gegenüber der Radialsteifigkeit bei einem erfindungsgemäßen Gummi-Feststofflager erreicht wird. Auf die Axialrichtung bezogen bleibt bevorzugt zwischen Außenhülse und Zwischenstück und zwischen Anschlagscheibe und Zwischenstück jeweils ein Bereich mit elastischer Zwischenschicht, so dass nicht axial eine schubstarre Koppelung erreicht wird. Insbesondere erhöht sich die axiale Steifigkeit progressiv zunehmend, wohingegen die radiale Steifigkeit sich linear zunehmend erhöht. Das Einbringen der festen Zwischenschicht erhöht die axiale Steifigkeit deutlich gegenüber der radialen Steifigkeit.

Die Zwischenschicht selber ist aus einem elastischen Werkstoff insbesondere einem gummiartigen Werkstoff oder einem elastomeren Werkstoff ausgebildet. Bevorzugt ist die Zwischenschicht mit der Innenhülse und/oder der Außenhülse und/oder der Anschlagscheibe stoffschlüssig gekoppelt. Insbesondere durch ein Kleben oder Aufvulkanisieren. Ebenfalls ist die Zwischenschicht bevorzugt stoffschlüssig mit dem Zwischenstück gekoppelt.

Das Zwischenstück selber ist in einer bevorzugten Ausgestaltungsvariante nach Art einer umlaufenden Scheibe ausgebildet und erstreckt sich in Axialrichtung des Gummi-Feststofflagers mit der Dicke der Scheibe selbst. Im Rahmen der Erfindung ist es jedoch auch möglich, dass Zwischenstück in Form beispielsweise von zwei Viertel Scheiben oder auch drei Drittel Scheiben mithin stückweise auszubilden. Dies ist somit nicht vollständig radial umlaufend sondern jeweils nur um ein Teilstück in Radialrichtung umlaufend ausgebildet.

In vorteilhafter Weiterbildung ist es ebenfalls möglich in Axialrichtung des Gummi-Feststofflagers mehrere Zwischenstücke insbesondere mehrere Scheiben parallel zueinander in einem Abstand zueinander anzuordnen. So können beispielsweise zwei Zwischenstücke in Form von zwei Scheiben in Axialrichtung parallel zueinander beabstandet werden.

Weiterhin besonders bevorzugt sind das Zwischenstück und eine Außenmantelfläche der Innenhülse zueinander beabstandet ausgebildet. Die Zwischenschicht ist somit auch in diesem beabstandetem Raum angeordnet.

In weiterer bevorzugter Ausgestaltungsvariante ist es möglich, dass die Innenkontur in dem inneren Querschnitt der Innenhülse kreisrund ausgebildet ist sondern beispielsweise ein Mehreck, Polygon oder aber auch blumenartig ausgebildet ist. Bevorzugt bilden diese Formen dann an ihrem nach innen gebildeten Ende eine zylindrische Aufnahmefläche aus. Somit kann ein die Innenhülse durchgreifender Bolzen drehbar mit dieser Aufnahmefläche gekoppelt sein, jedoch erhebliche Gewichtsreduzierungen vorgenommen werden.

Weiterhin besonders bevorzugt erstreckt sich die elastische Zwischenschicht in Radialrichtung gegenüber der Innenmantelfläche der Außenhülse im Bereich des Abstandes zwischen Außenhülse und Anschlagscheibe.

Besonders bevorzugt kann weiterhin die Außenhülse einen radial nach außen gerichteten Kragen haben, so dass weiterhin bevorzugt der Kragen und die Anschlagscheibe parallel zueinander verlaufen und insbesondere einen gleichen Radius aufweisen. Dazwischen ist dann bevorzugt die Zwischenschicht sowie insbesondere weiterhin das Zwischenstück angeordnet. Eine Kraft in Axialrichtung wird somit von Kragen über Zwischenstück auf die Anschlagscheibe jeweils unter elastischer Deformation der dazwischen befindlichen Zwischenschicht übertragen und verteilt sich auf eine größere Fläche. Dies steigert die Lebensdauererwartung. Gleichzeitig wird die axiale Steifigkeit erhöht.

Die Anschlagscheibe selbst kann mit der Innenhülse einstückig und werkstoffeinheitlich ausgebildet sein, sie kann jedoch als externes Bauteil mit der Innenhülse, insbesondere mit einer Außenmantelfläche der Innenhülse gekoppelt sein.

Weiterhin bevorzugt können auf der Anschlagscheibe und/oder auf dem Kragen außenseitig Formschlusselemente beispielsweise eine überstehende Nase ausgebildet sein. Dies ermöglicht eine verdrehfeste formschlüssige Lagesicherung des Lagers im eingebauten Zustand und/oder eine Orientierungshilfe bei der Ausrichtung des Lagers.

Weiterhin bevorzugt kann die Zwischenschicht einen sich in Axialrichtung zumindest abschnittsweise und radial zumindest teilweise umlaufenden Hohlraum aufweisen. Hierdurch wird eine progressive Radialsteifigkeit eingestellt. Zunächst verformt sich der Hohlraum nahezu widerstandfrei, wobei gleichzeitig dann die dadurch zunehmende Verformung der Zwischenschicht und/oder ein auf Block gehen der restlichen verbleibenden Zwischenschichtteile zu einer progressiven Radialsteifigkeit führt.

Weiterhin besonders bevorzugt kann die Außenhülse ein sich in Axialrichtung zumindest abschnittsweise und radial zumindest teilweise umlaufenden Hohlraum aufweisen. Dies ermöglicht einen großen Außendurchmesser der Außenhülse bereitzustellen, bei gleichzeitig jedoch nur geringem Gewicht.

Innenhülse und Außenhülse sind bevorzugt aus metallischen Werkstoffen ausgebildet. Die Offenbarung beschreibt weiterhin eine Achsanordnung insbesondere eine Verbundlenkerachsanordnung, bei welcher erfindungsgemäße Gummifeststofflager als Karosserielager eingesetzt sind. Insbesondere befinden sich dann bei einer Achsanordnung im Falle einer Verbundlenkerachse zwei Gummifeststofflager als Karosserielager im Bereich einer linken und einer rechten Kraftfahrzeugseite. Die Axialrichtung der Gummifeststoffkarosserielager ist dann bevorzugt in Kraftfahrzeugquerrichtung orientiert. Eine Auf- und Abbewegung, respektive Schwenkbewegung der Verbundlenkerachse erfolgt dann immer bevorzugt um die Axialrichtung des Gummifeststofflagers.

Insbesondere weist die Achse der Achsanordnung dann einen weiteren spurkorrigierenden Mechanismus auf. Hierzu ist bevorzugt der Radträger schwenkbar um eine virtuelle Lenkachse, auch als Spreizachse benannt, gelagert, so dass insbesondere bei Kurvenfahrt und/oder Bremsvorgängen ein auf das Fahrverhalten bezogen spurkorrigierender Mechanismus durch Schwenkbewegung um die virtuelle Längsachse durchgeführt wird. Insbesondere ist dies in Vorspur steuern oder in negativen Sturzgehen eines Rades.

Eine bevorzugte Ausgestaltungsvariante eines solchen spurkorrigierenden Mechanismus ist in der DE 10 2011 013 265 A1 bekannt, deren gesamter Offenbarungsgehalt sowie Figurendarstellung mit in diesen Anmeldungsgegenstand einbezogen werden.

Ein solcher spurkorrigierender Mechanismus zeichnet sich somit bevorzugt nachfolgend beschrieben aus:
Die Kraftfahrzeugachse ist insbesondere eine Verbundlenkerachse, welche aus einem Torsionsprofil mit daran angebundenen Längsschwingen ausgebildet ist, wobei an den freien Enden der Längsschwingen jeweils eine Radaufhängung über mindestens eine elastische Lagerung gekoppelt ist, so dass die Radaufhängung um eine virtuelle Lenkachse schwenkbar gekoppelt ist. Bevorzugt ist die Kraftfahrzeugachse dadurch gekennzeichnet, dass die Radaufhängung über ein Schwenklager mit mindestens einem Rotationsfreiheitsgrad und über zwei Gummimetalllager mit der Längsschwinge gekoppelt ist, wobei sich der Rotationsfreiheitsgrad um die virtuelle Lenkachse dreht.

Das Schwenklager weist ausschließlich Rotationsfreiheitsgrade auf, zwingend notwendig ist jedoch nur der Rotationsfreiheitsgrad um die Lenkachse selber. Zur Umsetzung dieser Funktion wären beispielsweise ein Gelenklager, ein Kugelgelenk, ein Gummilager oder aber ein anderes Lager mit mindestens einem Rotationsfreiheitsgrad denkbar. Hierdurch wird ein realer Drehpunkt festgelegt, um die die Radaufhängung sowie ein daran gekoppeltes Rad durch Einstellung von Spur und/oder Sturz schwenkbar sind.

Die zwei Gummimetalllagerungen sind derart angeordnet, dass sie einen Federschwerpunkt bilden, der auf das Kraftfahrzeugkoordinatensystem bezogen außerhalb des Kraftfahrzeuges liegt. Der Federschwerpunkt sowie das Schwenklager spannen die Lenkachse auf.

Vorzugsweise verfügen die Gummimetalllager dazu jeweils über eine Längsachse, wobei die Verlängerung der Längsachse den zuvor bereits genannten Federschwerpunkt näherungsweise bildet. Zwischen dem Schwenklager und dem Federschwerpunkt wird somit die Lenkachse aufgespannt, welche wiederum besonders bevorzugt den Radmittelpunkt schneidet. Hierdurch ergibt sich die Möglichkeit, eine passiv betätigte virtuelle Lenkachse an einer Kraftfahrzeugachse, insbesondere an einer Verbundlenkerhinterachse, zu realisieren. Die Anordnung ist besonders geprägt durch ihren einfachen Aufbau, eine günstige Produzierbarkeit sowie eine besondere Wartungsfreiheit während des Betriebes. Die Kraftfahrzeugachse zeichnet sich weiterhin besonders dadurch aus, dass bei erhöhter Zuladung, beispielsweise des Kofferraumes oder aber beim Durchfahren von Bodenwellen, also beim parallelen Einfedern beider an der Achse angeordneten Räder, keine relative Spurkorrektur zwischen Radaufhängung und Längsschwinge erfolgt. Bevorzugt wird das eigentliche Einfeder- bzw. Ausfederverhalten, also die Aufhängungskinematik der Verbundlenkerachse beibehalten. Eine Spurkorrektur, insbesondere die relative Spurkorrektur zwischen der Radaufhängung und der Längsschwinge, welche durch die Koppelung der Radaufhängung an der Längsschwinge möglich ist, wird dabei nahezu ausschließlich durch Bremskrafteinwirkung, d. h. durch Krafteinwirkung Fx in Kraftfahrzeug X-Richtung erfolgt oder aber durch Seitenkrafteinwirkung Fy, beispielsweise bei Kurvenfahrten.

Bei der Bremskrafteinwirkung erfolgt eine Vorspurkorrektur, wobei ein Standardbremsmanöver bei Geradeausfahrt eine Vorspurkorrektur an beiden Kraftfahrzeugrädern einer Achse hervorruft. Bei Kurvenfahrt erfolgt wiederum bei dem kurvenäußeren Rad eine Vorspurkorrektur und bei dem kurveninneren Rad gegebenenfalls eine Nachspurkorrektur. Diese Spurkorrekturen erfolgen maßgeblich aufgrund der relativen Verlagerung zwischen Radaufhängung und Längsschwinge. Übergreifend wird die jeweilige Koppelungskinematik der Verbundlenkerachse bei dem jeweiligen Manöver mit ausgeführt. Bevorzugt ist, auf das Kraftfahrzeugkoordinatensystem bezogen, das Schwenklager oberhalb der Gummimetalllager angeordnet, vorzugsweise oberhalb des Radmittelpunktes. Hierdurch wird ein Verlauf der virtuellen Lenkachse derart sichergestellt, der in Kraftfahrzeug Z-Richtung und Y-Richtung analog einem negativen Sturz orientiert ist und in Kraftfahrzeug Z- und X-Richtung vorzugsweise einen negativen Nachlauf aufweist. Vorzugsweise ist die virtuelle Lenkachse weiterhin derart positioniert, dass eine negative Nachlaufstrecke an dem jeweiligen Rad vorhanden ist. Ebenfalls ist es von Vorteil, wenn die virtuelle Lenkachse derart positioniert ist, dass ein negativer Lenkrollradius an dem jeweiligen Rad vorhanden ist.

Bevorzugt ist das Schwenklager als Kugelgelenk ausgebildet. Ein Kugelgelenk weist drei Rotationsfreiheitsgrade auf, wobei maßgeblich oder aber ausschließlich der Rotationsfreiheitsgrad um die virtuelle Lenkachse genutzt wird. Für die unteren Gummimetalllager werden Lagerungen mit hierauf bezogen hoher axialer Steifigkeit und relativ dazu geringer radialer Steifigkeit verwendet. Aufgrund eines betriebsbedingten Verschleißes der Gummimetalllager über die Dauer des Betriebes des Kraftfahrzeuges bietet ein Kugelgelenk jedoch zusätzlich zwei weitere Drehfreiheitsgrade, so dass hier Toleranzen bzw. Schwingungen kompensiert werden können, ohne dass ein Ausschlagen oder ähnliches gegenüber einem Lager mit nur einem Drehfreiheitsgrad vermieden wird. In der Folge ist das System verschleißarm und in der Regel wartungsfrei innerhalb eines Kraftfahrzeuglebens.

Vorzugsweise wird ein Verhältnis von Radialsteifigkeit zu Axialsteifigkeit derart gewählt, dass es zwischen einem Bereich von 1 : 30 bis 1 : 50 liegt. Hierbei ist eine geringe Radialsteifigkeit mit einer dreißig bis fünfzigfach so hohen Axialsteifigkeit im Verhältnis zu sehen. Insbesondere kann das Steifigkeitsverhältnis auch im Bereich zwischen 1 : 35 bis 1 : 45 oder aber insbesondere im Verhältnis von Radialsteifigkeit zu Axialsteifigkeit 1 : 40 ausgebildet sein.

Die axiale Steifigkeit nimmt dabei insbesondere bei erhöhter Krafteinwirkung progressiv zu. Die radiale Steifigkeit verläuft hierzu mit nur geringer Zunahme nahezu linear. Insbesondere wenn die Gummimetalllager vorgespannt eingebaut sind, lässt sich somit das Radial- zu Axialsteifigkeitsverhältnis erhöhen. Hierdurch wird sichergestellt, dass die zwei Gummimetalllager als elastisches System einen Federschwerpunkt bilden, wobei über eine geringe Verdrehsteifigkeit des Ersatzsystems der Federschwerpunkt als Drehpunkt des elastischen Systems aufgefasst werden kann. Die Position des Federschwerpunktes hängt dabei von der Orientierung der elastischen Komponenten ab, sowie dem Radial- zu Axialsteifigkeitsverhältnis der elastischen Komponenten.

Vorzugsweise sind die zwei Gummimetalllager auf das Kraftfahrzeugkoordinatensystem bezogen unterhalb des Schwenklagers angeordnet, besonders bevorzugt unterhalb der Radmitte. Der Bezug unterhalb der Radmitte bedeutet wiederum auf das Kraftfahrzeugkoordinatensystem bezogen nicht, dass es vertikal, also in Z-Richtung direkt unterhalb der Radmitte liegt, sondern kann auch vertikal unter und horizontal versetzt hierzu angeordnet sein. Das in Hauptfahrtrichtung hintere Gummimetalllager ist weiterhin bevorzugt mit seiner Längsachse im Wesentlichen parallel zur Raddrehachse orientiert.

Weiterhin bevorzugt ist das in Fahrtrichtung vorne liegende Gummimetalllager mit seiner Längsachse in einem Winkel α zu der Raddrehachse angeordnet, welcher vorzugsweise in einem Bereich von 10° bis 40°, insbesondere 20° bis 35° und bevorzugt 30° liegt. Bevorzugt wird jeweils zwischen dem Schwenklager, dem vorderen Gummimetalllager und dem Federschwerpunkt oder aber zwischen dem Schwenklager, dem hinteren Gummimetalllager und dem Federschwerpunkt eine Ebene aufgespannt. Die radiale Richtung des jeweiligen Gummimetalllagers liegt dabei normal zu der jeweils aufgespannten Ebene. Bevorzugt ist die Radaufhängung ein einschaliges Blechbauteil. Unter der Radaufhängung ist ein Aufhängungsbauteil zu verstehen, welches an die Längsschwinge über die Koppelung angebunden ist. Die Radaufhängung selber kann wiederum einen Radträger aufnehmen oder aber direkt ein Radlager mit entsprechender Radnabe zur Anbindung eines Rades aufweisen. Vorzugsweise ist das Blechbauteil ein Umformbauteil, insbesondere als Warmumform- und Presshärtbauteil ausgebildet. Es kann jedoch auch ein Schmiedeteil oder aber ein Gussbauteil sein. Die Radaufhängung selbst weist wiederum besonders bevorzugt einen Flanschbereich auf, der beispielsweise durch spanende Nachbearbeitung entsprechend präzise hergestellt werden kann. Besonders bevorzugt sind die Gummimetalllager aus zwei Gummimetallscheibenanordnungen ausgebildet, wobei die Gummimetallscheibenanordnungen jeweils an einer Seite der Radaufhängung angeordnet sind und zusammen mit dieser von einem Schraubbolzen formschlüssig durchgriffen sind. Durch entsprechende Anordnung der Gummimetallscheiben im Verbund ist es möglich, eine hohe axiale Steifigkeit gegenüber einer geringen radialen Steifigkeit, welche optimal für das erfindungsgemäße Betriebsverhalten der Spurkorrektur notwendig sind, einzustellen. Bevorzugt sollten die Gummimetalllager mit Schorrhärten zwischen 65 und 75 ausgebildet sein. Die Steifigkeitsverhältnisse sollten im Bereich zwischen 10kN/mm und 20 kN/mm, insbesondere bei in etwa 15kN/mm liegen. Die Axialsteifigkeit ist in Relation zur Radialsteifigkeit bevorzugt 40 mal größer zu wählen. Bevorzugt ist eine Gummimetallscheibenanordnung aus drei Metallscheiben aufgebaut, wobei zwischen die Metallscheiben jeweils eine Gummischicht eingebracht ist. Die Gummischicht kann hier beispielsweise aufvulkanisiert sein oder es können auch Gummischeiben im Verbund mit den Metallscheiben angeordnet sein. Diese können vorzugsweise auch untereinander verklebt sein. Bevorzugt sind die Gummimetalllageranordnungen vorgespannt, wobei die Gummischicht zumindest bereichsweise gegenüber den Metallscheiben vorstehend ausgebildet ist. Hierdurch lassen sich insbesondere hohe axiale Steifigkeiten bei geringer radialer Steifigkeit einstellen. Bevorzugt ist an die Radaufhängung ein Radträger anschraubbar, wobei der Radträger vorzugsweise relativ gegenüber der Radaufhängung justierbar ist. Hierbei ist es möglich, Produktionstoleranzen der Verbundlenkerachse, der Radaufhängung oder aber der Aufhängung durch eine Voreinstellung von Spur und Sturz des Radträgers gegenüber der Radaufhängung einzustellen. Während des Betriebsverhaltens selbst sind die Radaufhängung und der Radträger als schubstarre Einheit ausgebildet. Bevorzugt ist die Radaufhängung gegenüber der Längsschwinge justierbar, vorzugsweise über einen exzentrischen Versatz des Kugelgelenks. Hierbei ist es möglich, eine Spur- und/oder Sturzkorrektur über die elastisch gelagerte Radaufhängung vorzunehmen. Hierüber können weiterhin die sich im Betriebsverhalten einstellende Spurkorrektur in ihrer Intensität, bezogen auf den Einfeder- bzw- Ausfederweg, derart eingestellt werden, dass sich keine relativen Spurkorrekturwerte einstellen, sondern diese sich nahezu ausschließlich aus der Federungskinematik der Verbundlenkerachse ergibt.

Beispielsweise ist es somit möglich, eine Hinterachskonstruktion, im Nutzfahrzeugbau, zu verwenden, bei der durch verschiedene Aufbauten des Nutzfahrzeuges Massenunterschiede des Leergewichtes des Kraftfahrzeuges von bis zu 1000 kg auftreten können. Entsprechend muss für jede Aufbauvariante individuell eine Spurkorrekturabstimmung vorgenommen werden.

Weitere Vorteile, Merkmale, Eigenschaften und Aspekte der vorliegenden Erfindung werden in den schematischen Figuren gezeigt. Diese dienen dem einfachen Verständnis der Erfindung. Es zeigen:
- Figur 1a und b: einen jeweiligen Längsschnitt durch das Gummifeststofflager,
- Figur 2: eine alternative Ausgestaltungsvariante zu Figur 1,
- Figur 3: verschiedene Draufsichten auf ein Zwischenstück und
- Figur 4: einen Längsschnitt durch ein Lager in alternativer Ausgestaltung.

In den Figuren werden für gleiche oder ähnliche Bauteile dieselben Bezugszeichen verwendet, auch wenn eine wiederholte Beschreibung aus Vereinfachungsgründen entfällt.

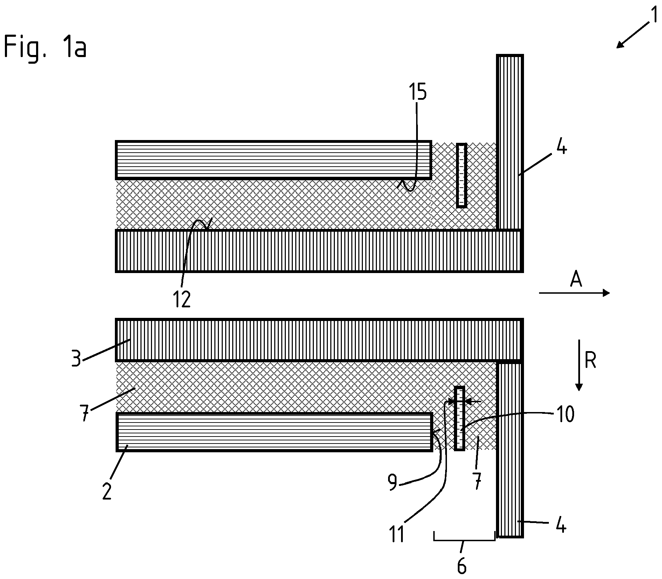

Figur 1a zeigt eine Längsschnittansicht durch ein erfindungsgemäßes Gummi-Feststofflager 1. Zu erkennen sind Innenhülse 3, Außenhülse 2 sowie die

Anschlagscheibe 4 und eine elastische Zwischenschicht 7 auch Gummischicht genannt. Erfindungsgemäß ist nunmehr vorgesehen, dass zwischen Ende 9 der Außenhülse 2 und der Anschlagscheibe 4 ein Abstand 6 ausgebildet ist. In diesem Abstand 6 ist ein Zwischenstück 10 angeordnet, wobei das Zwischenstück 10 aus einem festen Werkstoff, aus Kunststoff ausgebildet ist. Die Dicke 11 des Zwischenstückes 10 verringert das vorhandene elastische Volumen im Bereich des Abstandes 6, was zu einer erhöhten Querdehnungsbehinderung in der Gummischicht und einer höheren Axialsteifigkeit führt. Der Zwischenraum zwischen Außenhülse 2 und Innenhülse 3, welche mit der elastischen Zwischenschicht 7 gefüllt ist bleibt nahezu unverändert, weshalb die Radialsteifigkeit, mithin die Steifigkeit in Radialrichtung R annähernd gleichbleibend ist oder sich nur geringer erhöht im Vergleich zu der axialen Steifigkeit. Ein solches erfindungsgemäßes Gummi-Feststofflager 1 weist somit eine höhere Axialsteifigkeit gegenüber Radialsteifigkeit, insbesondere im Verhältnis größer 1,5:1, insbesondere größer 2:1, bevorzugt größer gleich 2,5:1 auf. Die Zwischenschicht 7 steht in Radialrichtung R im Bereich des Abstandes 6 gegenüber einer Innenmantelfläche 15 der Innenhülse 3 über.

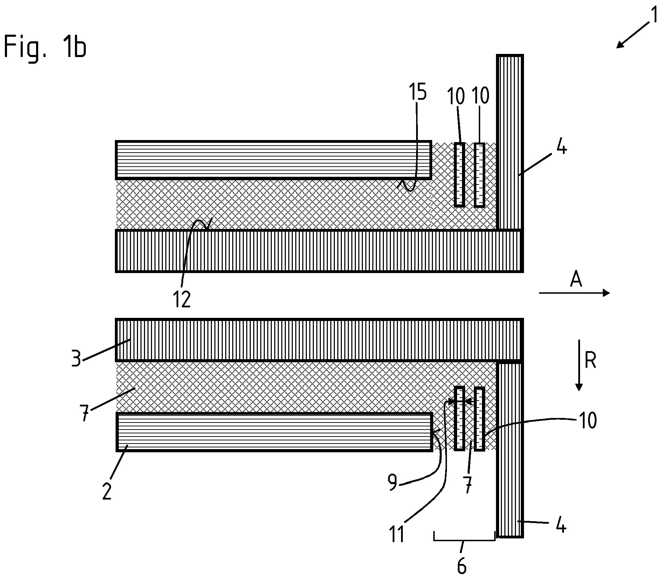

Figur 1b zeigt eine Ausgestaltungsvariante analog zu Figur 1a, wobei hier zwei Zwischenstücke 10 parallel zueinander beabstandet in Axialrichtung A angeordnet sind. Alternativ kann auch die Dicke 11 des Zwischenstückes 10 je nach gewünscht einzustellender Axialsteifigkeit variieren.

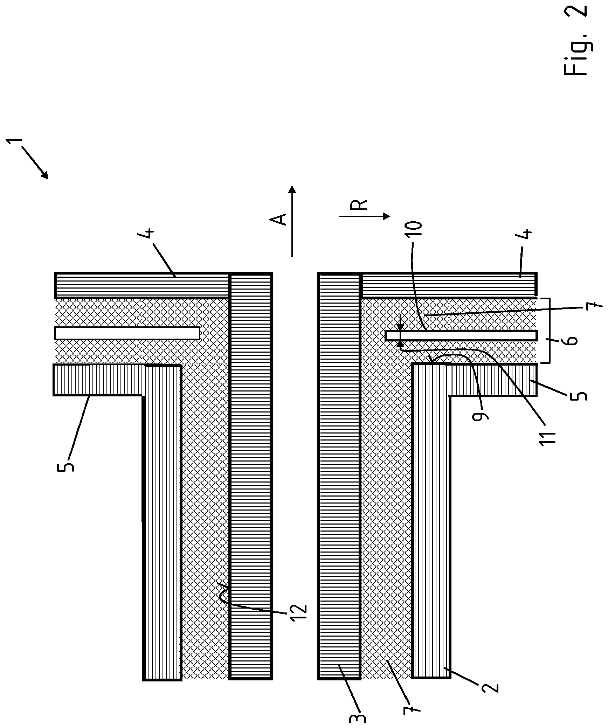

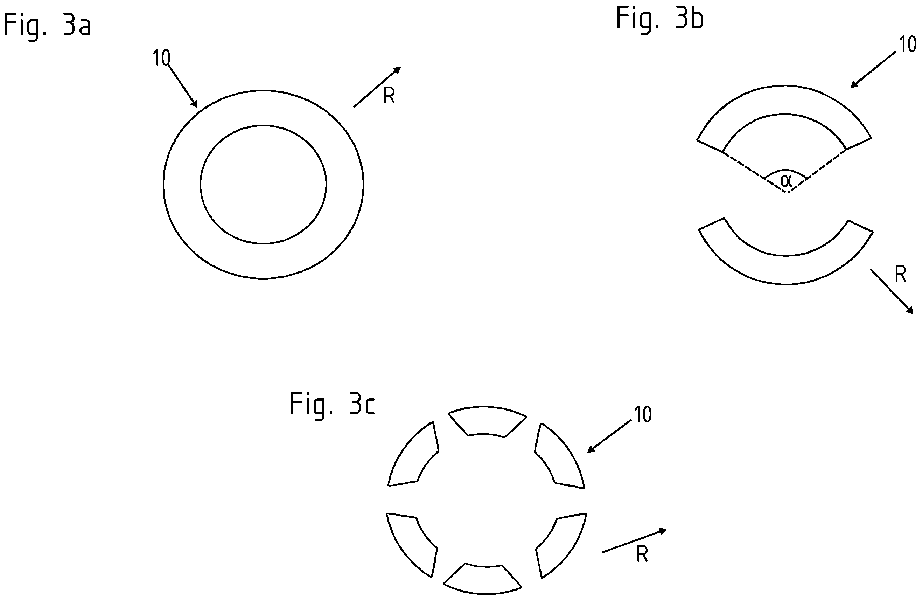

Figur 2 zeigt eine analoge Ausgestaltungsvariante zu Figur a1 und b, wobei hier jedoch im Bereich des Endes 9 der Außenhülse 2 der Kragen 5 gemäß Figur 1 eingezeichnet ist. Somit liegen die Flächen von Kragen 5 und Anschlagscheibe 4 unter Eingliederung des Zwischenstückes 10 sowie von Zwischenschicht 7 gegenüber und erhöhen die Fläche, auf welche sich eine zu übertragende Kraft in Axialrichtung A verteilt. Ebenfalls dargestellt in Figur 2 und 3 ist, dass auf die Radialrichtung R bezogen das Zwischenstück 10 und die Außenmantelfläche 12 der Innenhülse 3 zueinander beabstandet sind und auch hier die Zwischenschicht 7 das Zwischenstück 10 durchgreifend angeordnet ist. Das Zwischenstück 10 kann dabei von der Zwischenschicht 7 vollständig eingeschlossen sein oder aber auch auf die Radialrichtung R bezogen nach außen mit der Zwischenschicht 7 abschließen und/oder über die Zwischenschicht 7 überstehend ausgebildet sein.

Figur 3a bis c zeigen verschiedene Ausgestaltungsvarianten der Zwischenstücke 10 in Draufsicht. Gemäß Figur 3a ist das Zwischenstück 10 als Scheibe ausgebildet, nach dem Prinzip einer Unterlegscheibe. Gemäß Figur 3b ist das Zwischenstück 10 radial umlaufend zweiteilig ausgebildet, wobei sich jeder Teil des Zwischenstückes 10 über einen Winkelbereich α radial umlaufend erstreckt. Gemäß Figur 3c ist das Zwischenstück 10 mehrteilig radial umlaufend aus sechs Teilstücken aufgebaut. In der Fläche in der kein Zwischenstück 10 ausgebildet ist, wäre dann die Zwischenschicht 7 ausgebildet.

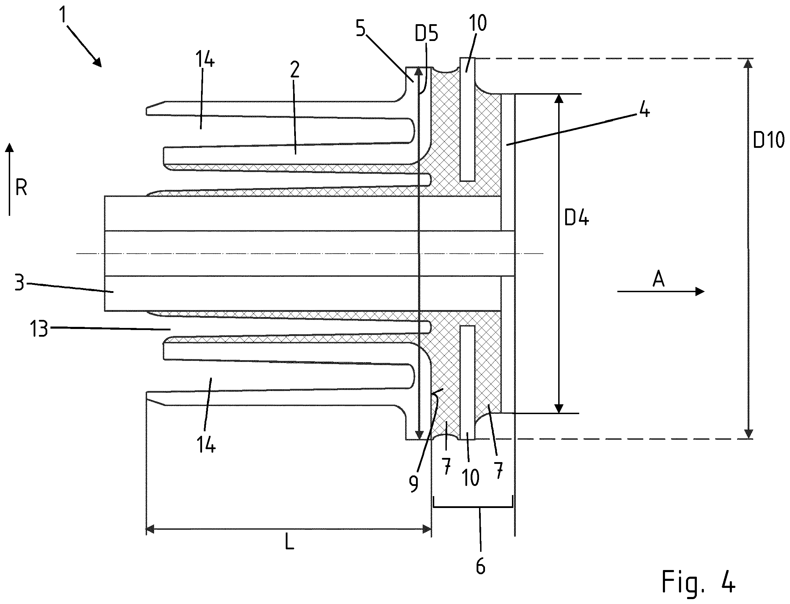

Figur 4 zeigt eine alternative Ausgestaltungsvariante des erfindungsgemäßen Gummi-Feststofflagers 1 in Längsschnittansicht. Dies weist wiederum eine Innenhülse 3 und eine Außenhülse 2 auf, wobei die Innenhülse 3 an einem axialen Ende eine Anschlagscheibe 4 aufweist. Ebenfalls erstreckt sich die Außenhülse 2 nur über einen Teil der Innenhülse 3 in Axialrichtung A. Zwischen Ende 9 der Außenhülse 2 und Anschlagscheibe 4 entsteht somit ein Abstand 6. An dem Abstand 6 ist wiederum ein Zwischenstück 10 angeordnet. Alternativ zu Figur 2 ist nunmehr jedoch die elastische Zwischenschicht 7 zwischen Außenhülse 2 und Innenhülse 3 einen Hohlraum 13 aufweisend, so dass eine Progressivität der Zwischenschicht 7 bezogen auf die Radialsteifigkeit gegeben ist. Der Hohlraum 13 erstreckt sich dabei radial zumindest teilweise umlaufend, bevorzugt vollständig umlaufend und in Axialrichtung A zumindest teilweise, bevorzugt wie dargestellt über einen Großteil der axialen Länge L der Außenhülse 2. Es können auch umlaufend verteilt jeweils Hohlkanäle eingebracht sein. Bevorzugt weist weiterhin die Außenhülse 2 ebenfalls einen Hohlraum 14 auf, wobei dieser weiterhin bevorzugt auch in Axialrichtung A zumindest teilweise umlaufend ausgebildet ist. Dies führt zu einer Gewichtseinsparung der Außenhülse 2. Ebenfalls ist hier der Radius der Außenhülse 2 größer ausgebildet als der Radius der Anschlagscheibe 4. Bevorzugt weist weiterhin in dieser Ausgestaltungsvariante das Zwischenstück 10 einen Durchmesser D10 auf, welcher größer ist als ein Durchmesser D5 des Kragens 5, wobei der Durchmesser D5 wiederum größer ist als ein Durchmesser D4 der Anschlagscheibe 4. Zwischen Kragen 5 sowie Ende 9 der Außenhülse und Zwischenstück 10 ist die elastische Zwischenschicht 7 angeordnet und auch zwischen Zwischenstück 10 und Anschlagscheibe 4. Ebenfalls ist die elastische Zwischenschicht 7 das Zwischenstück 10 durchgreifend angeordnet.

### Bezugszeichen:

- 1 -: Gummi-Feststofflager
- 2 -: Außenhülse
- 3 -: Innenhülse
- 4 -: Anschlagscheibe
- 5 -: Kragen
- 6 -: Abstand
- 7 -: Zwischenschicht
- 8 -: Nase
- 9 -: Ende zu 2
- 10 -: Zwischenstück
- 11 -: Dicke zu 10
- 12 -: Außenmantelfläche zu 3
- 13 -: Hohlraum zu 7
- 14 -: Hohlraum zu 2
- 15 -: Innenmantelfläche zu 3

- A -: Axialrichtung
- D4 -: Durchmesser zu 4
- D5 -: Durchmesser zu 5
- D10 -: Durchmesser zu 10
- L -: Länge zu 2
- R -: Radialrichtung

## Patentansprüche

1. Gummi-Feststofflager (1) zur Anordnung an einer Kraftfahrzeugachse, aufweisend eine Innenhülse (3) und eine Außenhülse (2), wobei zwischen Innenhülse (3) und Außenhülse (2) eine elastische Zwischenschicht (7) angeordnet ist und die Innenhülse (3) auf einer Seite eine Anschlagscheibe (4) aufweist, die sich von der Innenhülse (3) radial nach außen erstreckt, wobei die Außenhülse (2) sich in Axialrichtung (A) über einen Teil der Innenhülse (3) erstreckt und zwischen Außenhülse (2) und Anschlagscheibe (4) ein Abstand (6) ausgebildet ist, und dass im Bereich des Abstandes (6) mindestens ein Zwischenstück (10) aus festem Werkstoff angeordnet ist, **dadurch gekennzeichnet, dass** das Zwischenstück (10) aus Kunststoff ausgebildet ist.

2. Gummi-Feststofflager nach Anspruch 1, **dadurch gekennzeichnet, dass** in dem Abstand (6) die elastische Zwischenschicht (7) angeordnet ist, wobei bevorzugt die elastische Zwischenschicht (7) in dem Abstand (6) zumindest die Innenmantelfläche (15) der Innenhülse (3) in Radialrichtung (R) überragt.

3. Gummi-Feststofflager nach Anspruch 1 oder 2, **dadurch gekennzeichnet, dass** das Zwischenstück (10) radial umlaufend ausgebildet ist, insbesondere als Scheibe oder dass das Zwischenstück (10) mehrteilig in Radialrichtung (R) umlaufend verteilt ausgebildet ist.

4. Gummi-Feststofflager nach einem der Ansprüche 1 bis 3, **dadurch gekennzeichnet, dass** zwei oder mehr Zwischenstücke (10) in Axialrichtung (A) parallel zueinander beabstandet ausgebildet sind.

5. Gummi-Feststofflager nach einem der Ansprüche 1 bis 4, **dadurch gekennzeichnet, dass** die Außenmantelfläche (12) der Innenhülse (3) und das Zwischenstück (10) radial zueinander beabstandet sind, wobei insbesondere die Zwischenschicht (7) das Zwischenstück (10) durchgreifend angeordnet ist.

6. Gummi-Feststofflager nach einem der vorhergehenden Ansprüche, **dadurch gekennzeichnet, dass** die Zwischenschicht (7) aus einem gummiartigen Werkstoff und/oder elastomeren Werkstoff ausgebildet ist, wobei die Zwischenschicht (7) insbesondere mit der Außenhülse (2) und/oder der Innenhülse (3) und/oder der Anschlagscheibe (4) verklebt ist.

7. Gummi-Feststofflager nach einem der vorhergehenden Ansprüche, **dadurch gekennzeichnet, dass** die Außenhülse (2) an ihrem zu der Anschlagscheibe (4) hin gerichteten Ende einen in Radialrichtung (R) nach außen orientierten Kragen (5) aufweist.

8. Gummi-Feststofflager nach einem der vorhergehenden Ansprüche, **dadurch gekennzeichnet, dass** die Anschlagscheibe (4) einstückig und werkstoffeinheitlich mit der Innenhülse (3) ausgebildet ist oder dass die Anschlagscheibe (4) als separates Bauteil mit der Innenhülse (3) gekoppelt ist.

9. Gummi-Feststofflager nach einem der vorhergehenden Ansprüche, **dadurch gekennzeichnet, dass** in der Zwischenschicht (7) zwischen Innenhülse (3) und Außenhülse (2) ein sich in Axialrichtung (A) zumindest abschnittsweise erstreckender und radial zumindest teilweise umlaufender Hohlraum (13) ausgebildet ist.

10. Gummi-Feststofflager nach einem der vorhergehenden Ansprüche, **dadurch gekennzeichnet, dass** in der Außenhülse (2) ein sich in Axialrichtung (A) zumindest abschnittsweise erstreckender und radial zumindest teilweise umlaufender Hohlraum (14) ausgebildet ist.

11. Gummi-Feststofflager nach einem der vorhergehenden Ansprüche, **dadurch gekennzeichnet, dass** das Verhältnis von Axialsteifigkeit zu Radialsteifigkeit größer 1,5 zu 1, insbesondere größer 2 zu 1 und bevorzugt größer gleich 2,5 zu 1 ist.

## Claims

1. Solid rubber bearing (1) for arrangement on a motor vehicle axle, comprising an inner sleeve (3) and an outer sleeve (2), wherein an elastic intermediate layer (7) is arranged between the inner sleeve (3) and the outer sleeve (2), and the inner sleeve (3) has on one side a stop disc (4) that extends radially outwards from the inner sleeve (3), wherein the outer sleeve (2) extends in the axial direction (A) over a part of the inner sleeve (3) and a space (6) is formed between the outer sleeve (2) and the stop disc (4), and at least one intermediate piece (10) of solid material is arranged in the region of the space (6), **characterised in that** the intermediate piece (10) is made of plastic material.

2. Solid rubber bearing according to claim 1, **characterised in that** the elastic intermediate layer (7) is arranged in the space (6), wherein the elastic intermediate layer (7) in the space (6) preferably projects beyond at least the inner shell surface (15) of the inner sleeve (3) in the radial direction (R).

3. Solid rubber bearing according to claim 1 or 2, **characterised in that** the intermediate piece (10) is designed in a radially circumferential manner, in particular as a disc or **in that** the intermediate piece (10) is constructed in multiple parts distributed circumferentially in the radial direction (R).

4. Solid rubber bearing according to any of claims 1 to 3, **characterised in that** two or more intermediate pieces (10) are designed to be spaced apart parallel to one another in the axial direction (A).

5. Solid rubber bearing according to any of claims 1 to 4, **characterised in that** the outer shell surface (12) of the inner sleeve (3) and the intermediate piece (10) are radially spaced apart from one another, wherein, in particular, the intermediate layer (7) is arranged so as to engage through the intermediate piece (10).

6. Solid rubber bearing according to any of the preceding claims, **characterised in that** the intermediate layer (7) is made of a rubber-like material and/or elastomeric material, wherein the intermediate layer (7) is glued in particular to the outer sleeve (2) and/or the inner sleeve (3) and/or the stop disc (4).

7. Solid rubber bearing according to any of the preceding claims, **characterised in that** the outer sleeve (2) has a collar (5) oriented outwards in the radial direction (R) at its end facing the stop disc (4).

8. Solid rubber bearing according to any of the preceding claims, **characterised in that** the stop disc (4) is constructed in one piece and in a materially uniform manner with the inner sleeve (3) or **in that** the stop disc (4) is coupled to the inner sleeve (3) as a separate component.

9. Solid rubber bearing according to any of the preceding claims, **characterised in that** a cavity (13) extending at least in sections in the axial direction (A) and running at least partially circumferentially in the radial direction is formed in the intermediate layer (7) between the inner sleeve (3) and the outer sleeve (2).

10. Solid rubber bearing according to any of the preceding claims, **characterised in that** a cavity (14) extending at least in sections in the axial direction (A) and running at least partially circumferentially in the radial direction is formed in the outer sleeve (2).

11. Solid rubber bearing according to any of the preceding claims, **characterised in that** the ratio of axial rigidity to radial rigidity is greater than 1.5 to 1, in particular greater than 2 to 1 and preferably greater than or equal to 2.5 to 1.

## Revendications

1. Palier en caoutchouc et matière solide (1) destiné à être agencé sur un essieu de véhicule automobile, comportant un manchon intérieur (3) et un manchon extérieur (2), dans lequel une couche intermédiaire élastique (7) est agencée entre le manchon intérieur (3) et le manchon extérieur (2) et le manchon intérieur (3) comporte sur un côté un disque de butée (4) qui s'étend de façon radiale vers l'extérieur à partir du manchon intérieur (3),
dans lequel le manchon extérieur (2) s'étend en direction axiale (A) sur une partie du manchon intérieur (3) et un écart (6) est réalisé entre le manchon extérieur (2) et le disque de butée (4)
et dans lequel au moins une pièce intercalaire (10) en une matière solide est agencée dans la zone de l'écart (6),
**caractérisé en ce que** la pièce intercalaire (10) est réalisée en plastique.

2. Palier en caoutchouc et matière solide selon la revendication 1, **caractérisé en ce que** la couche intermédiaire élastique (7) est agencée dans l'écart (6), laquelle couche intermédiaire élastique (7) dans l'écart (6) dépasse de préférence au moins la surface enveloppante intérieure (15) du manchon intérieur (3) en direction radiale (R).

3. Palier en caoutchouc et matière solide selon la revendication 1 ou 2, **caractérisé en ce que** la pièce intercalaire (10) est réalisée de façon radiale circulaire, en particulier sous forme de disque, ou **en ce que** la pièce intercalaire (10) est réalisée en plusieurs parties réparties de manière circulaire en direction radiale (R).

4. Palier en caoutchouc et matière solide selon l'une quelconque des revendications 1 à 3, **caractérisé en ce que** deux ou plusieurs pièces intercalaires (10) sont réalisées parallèles et distantes les unes des autres en direction axiale (A).

5. Palier en caoutchouc et matière solide selon l'une quelconque des revendications 1 à 4, **caractérisé en ce que** la surface enveloppante extérieure (12) du manchon intérieur (3) et la pièce intercalaire (10) sont distantes l'une de l'autre de façon radiale, la couche intermédiaire (7) étant en particulier agencée de manière à passer à travers la pièce intercalaire (10).

6. Palier en caoutchouc et matière solide selon l'une quelconque des revendications précédentes, **caractérisé en ce que** la couche intermédiaire (7) est réalisée en un matériau du type caoutchouc et/ou en un matériau élastomère, laquelle couche intermédiaire (7) est en particulier collée au manchon extérieur (2) et/ou au manchon intérieur (3) et/ou au disque de butée (4).

7. Palier en caoutchouc et matière solide selon l'une quelconque des revendications précédentes, **caractérisé en ce que** le manchon extérieur (2) comporte au niveau de son extrémité dirigée vers le disque de butée (4) un collet (5) orienté vers l'extérieur en direction radiale (R).

8. Palier en caoutchouc et matière solide selon l'une quelconque des revendications précédentes, **caractérisé en ce que** le disque de butée (4) est réalisé d'un seul tenant et dans le même matériau que le manchon intérieur (3) ou **en ce que** le disque de butée (4) est couplé en tant que pièce séparée au manchon intérieur (3).

9. Palier en caoutchouc et matière solide selon l'une quelconque des revendications précédentes, **caractérisé en ce qu'**un espace creux (13) qui s'étend au moins par parties en direction axiale (A) et qui est de façon radiale au moins en partie circulaire est réalisé dans la couche intermédiaire (7) entre le manchon intérieur (3) et le manchon extérieur (2).

10. Palier en caoutchouc et matière solide selon l'une quelconque des revendications précédentes, **caractérisé en ce qu'**un espace creux (14) qui s'étend au moins par parties en direction axiale (A) et qui est de façon radiale au moins en partie circulaire est réalisé dans le manchon extérieur (2).

11. Palier en caoutchouc et matière solide selon l'une quelconque des revendications précédentes, **caractérisé en ce que** le rapport de la rigidité axiale à la rigidité radiale est supérieur à un rapport de 1,5 à 1, en particulier supérieur à un rapport de 2 à 1 et de préférence supérieur à un rapport de 2,5 à 1.
